# EUROPÄISCHE PATENTSCHRIFT

(11) **EP 1 799 036 B1**
(45) Veröffentlichungstag und Bekanntmachung des Hinweises auf die Patenterteilung: **09.11.2011**
(21) Anmeldenummer: 05792050.6
(22) Anmeldetag: 22.09.2005
(51) Int. Cl.: A01N 25/30, A01N 43/50

(54) **AGROCHEMISCHE ZUSAMMENSETZUNG ENTHALTEND PHOSPHORSÄUREESTER**
AGROCHEMICAL COMPOSITION CONTAINING PHOSPHORIC ACID ESTER
COMPOSITION AGROCHIMIQUE CONTENANT DE L'ESTER PHOSPHORIQUE

(30) Priorität: 29.09.2004 DE 102004047092
(43) Veröffentlichungstag der Anmeldung: 27.06.2007
(73) Patentinhaber: Clariant Produkte (Deutschland) GmbH, 65929 Frankfurt am Main (DE)
(72) Erfinder: HESS, Joachim, 65719 Hofheim (DE); ZERRER, Ralf, 63791 Karlstein (DE); SOWA, Christian, 67435 Neustadt/Weinstrasse (DE)
(74) Vertreter: Paczkowski, Marcus
(86) Internationale Anmeldenummer: PCT/EP2005/010255
(87) Internationale Veröffentlichungsnummer: WO 2006/034817

(56) Entgegenhaltungen:
- EP-A- 0 077 233
- EP-A- 0 579 052
- WO-A-00/56146
- WO-A-01/11958
- WO-A-01/47356
- WO-A-99/27781
- US-A- 4 976 769
- DATABASE WPI Section Ch, Week 199734 Derwent Publications Ltd., London, GB; Class A97, AN 1997-371187 XP002371506 & RU 2 071 256 C1 (HERBICIDES PLANT GROWTH REGULATORS INST) 10. Januar 1997 (1997-01-10)

## Beschreibung

Die vorliegende Erfindung betrifft agrochemische Zusammensetzungen, enthaltend einen oder mehrere pestizide Wirkstoffe und/oder ein oder mehrere Phytohormone sowie eine oder mehrere Substanzen ausgewählt aus Alkylarylphosphorsäureestern mit verzweigten Alkylgruppen.

Die Phosphorsäureester steigern die biologische Aktivität der Pestizide (Herbizide, Insektizide, Fungizide, Akarizide, Bakterizide, Molluskide, Nematizide und Rodentizide) und der Phytohormone, verbessern die Löslichkeit in sowohl wässrigem als auch organischem Medium, sowie die Kompatibilität einzelner Inhaltsstoffe der pestiziden Mittel.

Den größten Anteil an Pestiziden stellen Herbizide dar, gefolgt von Insektiziden und Fungiziden. Die wichtigsten Herbizide sind chemische Substanzen, die auf das Transportsystem von Pflanzen, beispielsweise durch eine Hemmung von Photosynthese, Fettsäurebiosynthese oder Aminosäurebiosynthese, einwirken und zur Hemmung von Keimbildung und Wachstum bis zum Absterben der Pflanze führen.

Phytohormone steuern physiologische Reaktionen, wie Wachstum, Blührhythmus, Zellteilung und Samenreifung.

Die biologische Aktivität eines Pestizides bzw. Phytohormons kann anhand des Pflanzenwachstums bzw. der Schädigung der Pflanzen durch die Einwirkung des Wirkstoffes auf das Blatt in Abhängigkeit von der Wirkzeit und der Wirkkonzentration bestimmt werden.

Um die pestizide Wirkung optimal zu entfalten, muss das Pestizid das Blattgrün benetzen und ausreichend lange dort verbleiben oder ein Durchdringen der Wirksubstanz durch die Blattoberfläche erreicht werden. Dazu werden, wie in einer Vielzahl von Patentschriften beschrieben, den Pestizid-Formulierungen Hilfsstoffe zugesetzt, die das Netzvermögen, die Löslichkeit, das Emulgiervermögen oder das Adsorptionsverhalten der Wirksubstanz verbessern.

An agrochemische Zusammensetzungen wie beispielsweise Pflanzenschutzformulierungen werden hohe Anforderungen gestellt bezüglich der chemischen und physikalischen Stabilität unter extremen Temperaturbedingungen bei langen Lagerzeiten. Zudem sind die Zusammensetzungen hohen Scherkräften während des Ausbringens auf die Felder ausgesetzt.

Überraschend wurde nun gefunden, dass agrochemische Zusammensetzungen wie z.B. Pflanzenschutzformulierungen enthaltend
a) eine oder mehrere Substanzen ausgewählt aus Pestiziden und Phytohormonen und
b) eine oder mehrere Substanzen ausgewählt aus Alkylarylphosphorsäureestem,
die dadurch gekennzeichnet sind, dass die Verbindungen der Komponente b) eine oder mehrere verzweigte Alkylgruppen enthalten, und ausgewählt sind aus Alkylarylphosphorsäureestern der Formel (I) 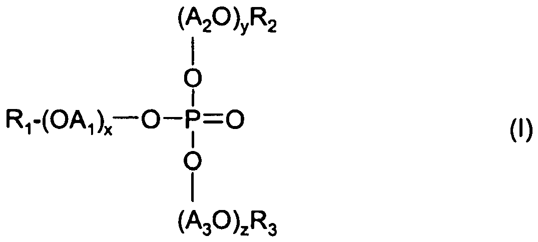 worin
- R₁: eine Arylgruppe ist, die mit 1 bis 3 verzweigten Alkylgruppen, die jeweils unabhängig voneinander 3 bis 18 Kohlenstoffatome enthalten, substituiert ist,
- R₂ und R₃: jeweils unabhängig voneinander für Wasserstoff, Alkalimetall, Erdalkalimetall, substituiertes oder unsubstituiertes Ammonium oder für organische basische Gruppen oder einen verzweigten, gesättigten oder ungesättigten Alkyl- oder Alkenylrest mit 6 bis 30, Kohlenstoffatomen stehen oder eine Arylgruppe ist, die mit 1 bis 3 verzweigten Alkylgruppen, die jeweils unabhängig voneinander 3 bis 18 Kohlenstoffatome enthalten, substituiert ist,
- A₁, A₂ und A₃: jeweils unabhängig voneinander für eine Alkylengruppe mit 2 bis 4 Kohlenstoffatomen stehen und
- x, y und z: jeweils unabhängig voneinander eine Zahl von 0 bis 30 bedeuten,
eine signifikante Wirksamkeitssteigerung der Pestizide zeigen, die Kompatibilität von Inhaltsstoffen (Pestiziden, Adjuvants, Dispergiermitteln, Elektrolyten etc.) mit sehr unterschiedlichen physikalisch-chemischen Eigenschaften verbessern, die Löslichkeit der Pestizide und gegebenenfalls weiterer Inhaltsstoffe sowohl im wässrigen, als auch im organischen Medium steigern und auch unter starker Belastung stabil sind. Zudem sind die Alkylarylphosphorsäureester der Formel (I) mit verzweigten Alkylgruppen gute Dispergier- bzw. Emulgiermittel und können somit hervorragend in Dispersionen, insbesondere Suspensionen und Emulsionen eingesetzt werden.

Gegenstand der vorliegenden Erfindung sind daher Zusammensetzungen enthaltend
a) eine oder mehrere Substanzen ausgewählt aus Pestiziden und Phytohormonen und
b) eine oder mehrere Substanzen ausgewählt aus Alkylarylphosphorsäureestern der Formel (I) 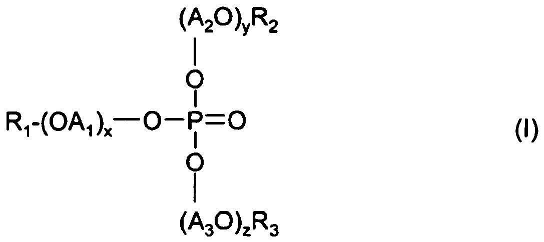 worin
   - R₁: eine Arylgruppe, insbesondere eine Phenylgruppe, ist, die mit 1 bis 3 verzweigten Alkylgruppen, die jeweils unabhängig voneinander 3 bis 18 und vorzugsweise 4 bis 12 Kohlenstoffatome enthalten, substituiert ist,
   - R₂ und R₃: jeweils unabhängig voneinander für Wasserstoff, Alkalimetall, Erdalkalimetall, substituiertes oder unsubstituiertes Ammonium oder für organische basische Gruppen oder einen verzweigten, gesättigten oder ungesättigten Alkyl- oder Alkenylrest mit 6 bis 30, vorzugsweise mit 8 bis 22 und besonders bevorzugt mit 12 bis 18 Kohlenstoffatomen stehen oder eine Arylgruppe, insbesondere eine Phenylgruppe, ist, die mit 1 bis 3 verzweigten Alkylgruppen, die jeweils unabhängig voneinander 3 bis 18 und vorzugsweise 4 bis 12 Kohlenstoffatome enthalten, substituiert ist,
   - A₁, A₂ und A₃: jeweils unabhängig voneinander für eine Alkylengruppe mit 2 bis 4 Kohlenstoffatomen stehen und
   - x, y und z: jeweils unabhängig voneinander eine Zahl von 0 bis 30, vorzugsweise von 1 bis 20, besonders bevorzugt von 4 bis 10 und insbesondere bevorzugt von 6 bis 8 bedeuten.

US 4,976,769 offenbart Biozid-Zusammensetzungen enthaltend eine wirksame Menge eines Biozids und eine wirksame Menge eines Biozid-Aktivators ausgewählt aus der Gruppe bestehend aus Alkylphosphaten, Alkenylphosphaten, Hydroxyalkylphosphaten, Polyoxyalkylenealkyletherphosphaten, Salzen davon, Polyoxyalkylenealkenyletherphosphaten, Salzen davon, Polyoxyalkylenhydroxyalkyletherphosphaten und Salzen davon.

EP 0 579 052 beschreibt Pflanzenbehandlungsmittel enthaltend mindestens ein Biozid als Wirkstoff und einen Akzelerator, der das Eindringvermögen in die Kutikula erhöht, und an sich bekannte Hilfsstoffe. Der Akzelerator kann z. B. ein Phosphorsäureester sein, der vorzugsweise C₁-C₈-Alkylgruppen wie z. B. Ethylhexyl enthält.

EP 0 077 233 betrifft die zur Verfügung Stellung von festen hydrophoben Substanzen in der Form von benetzbaren Pulvern. Die Pulver enthalten u. a. Phosphorsäureester mit linearen oder verzweigten aliphatischen C₂-C₁₀-Alkoholen oder ihre Salze. Es werden u. a. beispielhaft Zusammensetzungen mit bestimmten Pestiziden und Phosphorsäureester von 2-Ethylhexanol in der Form des Triethanolamin-Salzes offenbart.

WO 99/27781, WO 00/56146 und WO 01/47356 beschreiben beispielsweise explizit Formulierungen, die bestimmte Pestizide und phosphatierte ethoxylierte Isotridecylalkohole enthalten.

In einer bevorzugten Ausführungsform der Erfindung sind alle in den Verbindungen der Komponente b) enthaltenen Alkylgruppen verzweigt.

In einer weiteren bevorzugten Ausführungsform der Erfindung beträgt die Anzahl der Kohlenstoffatome in allen Alkylgruppen der Verbindungen der Komponente b) zusammen von 6 bis 36, vorzugsweise von 6 bis 30 und besonders bevorzugt von 8 bis 22.

In den Verbindungen der Formel (I) bedeuten A₁, A₂ und A₃ jeweils unabhängig voneinander insbesondere Ethylen, Propylen oder Butylen.

In einer weiteren bevorzugten Ausführungsform der Erfindung ist die eine oder die mehreren Substanzen der Komponente b) ausgewählt aus gegebenenfalls Ethylenoxid-Einheiten enthaltenden Tri-sec-butylphenolphosphorsäureestern und deren Salzen. Unter diesen Verbindungen sind diejenigen bevorzugt, die 4 bis 8 Ethylenoxid-Einheiten enthalten. Besonders bevorzugt sind Mischungen von Tri-sec-butylphenolphosphorsäureestem, in denen der Anteil an Monoester von 40 bis 60 Gew.-% und der Anteil an Diester von 40 bis 60 Gew.-% beträgt.

Die in den erfindungsgemäßen Zusammensetzungen verwendeten Substanzen der Komponente b) mit verzweigten Alkylgruppen haben gegenüber analogen Verbindungen, die aber keine verzweigten Alkylgruppen enthalten oder ausschließlich lineare Alkylgruppen enthalten, den Vorteil der besseren Wirksamkeitssteigerung.

Die Darstellung der in den erfindungsgemäßen Zusammensetzungen verwendeten Substanzen der Komponente b) erfolgt in bekannter Weise durch Umsetzung von Tetraphosphordecaoxid oder Orthophosphorsäure und gegebenenfalls Fettalkoholen oder alkoxylierten Fettalkoholen und den entsprechenden aromatischen Alkoholen unter Bildung von Mono- und Diestern mit geringen Anteilen an Triestern und gegebenenfalls anschließender Neutralisation mit geeigneten basischen Verbindungen, beispielsweise mit Alkalihydroxiden, insbesondere mit NaOH und KOH, vorzugsweise mit KOH, aber auch mit basischen Aminosäuren, beispielsweise Arginin, Ornithin, Lysin, Oxylsin und Alkanolaminen, beispielsweise Triethanolamin, Diethanolamin, Monoethanolamin oder mit substituierten oder unsubstituierten Ammoniumverbindungen.

In einer weiteren bevorzugten Ausführungsform der Erfindung sind die eine oder die mehreren Substanzen der Komponente a) ausgewählt aus Pestiziden, vorzugsweise aus der Gruppe bestehend aus Herbiziden, Insektiziden, Fungiziden, Akariziden, Bakteriziden, Molluskiden, Nematiziden und Rodentiziden. Unter diesen Substanzen sind wiederum Herbizide bevorzugt.

Geeignete Herbizide sind, ohne die Erfindung auf diese einzuschränken Acetochlor, Acifluorfen, Aclonifen, Acrolein, Alachlor, Ametryn, Amitrol, Asulam, Atrazin, Benazolin, Bensulfuron-methyl, Bentazon, Benzofenap, Bialaphos, Bifenox, Bilanafos, Bromacil, Bromobutid, Bromofenoxim, Bromoxynil, Butachlor, Butafenacil, Chlormethoxyfen, Chloramben, Chloressigsäure, Chlorbromuron, Chlorimuron-ethyl, Chlorotoluron, Chlornitrofen, Chlorotoluron, Chlorthal-dimethyl, Clodinafop, Clodinafop propargyl, Clopyralid, Clomeprop, Cyanazin, 2,4-D, 2,4-DB, Diamuron, Dalapon, Desmedipham, Desmetryn, Dicamba, Dichlorbenil, Dichlorprop, Diclofop, Difenzoquat, Diflufenican, Dimefuron, Dimethachlor, Dimethametryn, Dimethenamid, Dinitramin, Diquat, Diuron, Endothall, Ethametsulfuron-methyl, Fenac, Fenclorim, Fenoxaprop, Fenoxaprop-ethyl, Flamprop, Fenoxaprop-methyl, Flazasulfuron, Fluazifop, Fluazifop-p-butyl, Flumetsulam, Flumiclorac, Flumiclorac-phenyl, Fluoroglycofen, Flumetsulam, Flumeturon, Flumioxazin, Flupoxam, Flupropanat, Fluridon, Flurtamon, Fomesafen, Fosamine, Glufosinate, Glyphosat, Haloxyfop, Imazapic, Imazameth, Imazamethabenz, Imazamox, Imazapic, Imazapyr, Imazaquin, Imazethapyr, Imazethapyr-ammonium, loxynil, Isoproturon, Isoxaben, Isoxapyrifop, Lactofen, Lenacil, Linuron, MCPA, MCPB, Mecoprop, Mefenacet, Mesotrion, Metazachlor, Methabenzthiazuron, Methylarsensäure, Metachlor, Metobenzuron, Naproanilid, Naptalam, Neburon, Nonansäure, Norflurazon, Oryzalin, Oxadiazon, Oxyfluorfen, Paraquat, Phenmedipham, Picloram, Pretilachlor, Prodiamin, Prometon, Prometryn, Propachlor, Propazin, Propisochlor, Propyzamid, Pyrazolynat, Pyrazosulfuron-ethyl, Pyributicarb, Pyridat, Quinclorac, Quizalofop, Quizalofopethyl, Rimsulfuron, Siduron, Simazin, Simetryn, Sulfaminsäure, 2,3,6-TBA, TCA, Terbumeton, Terbuthylazin, Terbutyrin, Trichloressigsäure, Triclopyr, Trietazin, Thenylchlor, Thiazopyr, Trialkoxydim, Trietazin und deren Salze.

In einer besonders bevorzugten Ausführungsform der Erfindung sind die eine oder die mehreren Substanzen der Komponente a) ausgewählt aus Clodinafop propargyl und Imazethapyr-ammonium.

Die Phosphorsäureester gemäß Komponente b) der erfindungsgemäßen Zusammensetzungen eignen sich z.B. als Adjuvant in Pflanzenschutzformulierungen, sowohl in fester Form als auch in gel- oder pastenförmiger Form und vorzugsweise in sprühfähiger flüssiger Form.

Die erfindungsgemäßen Zusammensetzungen können in fester Form als Pulver, Pellets, Tabletten oder Granulate hergestellt werden, die vor dem Gebrauch in Wasser gelöst werden. Feste Zubereitungen enthalten die eine oder die mehreren Substanzen der Komponente a) vorzugsweise in den Mengen von 20 bis 80, besonders bevorzugt von 50 bis 75 und insbesondere bevorzugt von 60 bis 70 Gew.-% und die eine oder die mehreren Substanzen der Komponente b) vorzugsweise in den Mengen von 5 bis 60 und besonders bevorzugt von 10 bis 30 Gew.-%. Konzentrat-Formulierungen, die vor dem Gebrauch verdünnt werden, enthalten die eine oder die mehreren Substanzen der Komponente a) vorzugsweise in den Mengen von 5 bis 50 und besonders bevorzugt von 20 bis 40 Gew.-% und die eine oder die mehreren Substanzen der Komponente b) vorzugsweise in den Mengen von 5 bis 70 Gew.-%.
Die erfindungsgemäßen Zusammensetzungen können nach den üblichen Methoden angewandt werden. Wässrige Konzentrate und feste Formulierungen werden vor dem Ausbringen mit der entsprechenden Menge an Wasser verdünnt.

Pro Hektar werden Mengen an Pestizid und/oder Phytohormon im Bereich von 0,1 bis 5 kg, bevorzugt 0,3 bis 2,5 kg ausgebracht. Die Menge an den Substanzen der Komponente b) liegt im Bereich von 0,10 bis 2,1 kg/ha. Das Volumen der für die Aussprühung erstellten Formulierung liegt im Bereich von 50 bis 1000 l/ha.

Die erfindungsgemäßen Zusammensetzungen können Tenside, Verdickungsmittel, Antigelmittel, Frostmittel, Lösungsmittel, Dispergiermittel, Emulgatoren, Konservierungsmittel, weitere Adjuvants, Bindemittel, Antischaummittel, Verdünner, Sprengmittel und Netzmittel enthalten.

In einer weiteren bevorzugten Ausführungsform der Erfindung enthalten die erfindungsgemäßen Zusammensetzungen anionische Tenside. Bevorzugte anionische Tenside sind geradkettige und verzweigte Alkylsulfate, -sulfonate, -carboxylate, -phosphate, -sulphosuccinate und -taurate, Alkylestersulfonate, Arylalkylsulfonate und Alkylethersulfate.

Alkylsulfate sind wasserlösliche Salze oder Säuren der Formel ROSO₃M, worin R bevorzugt einen C₁₀-C₂₄-Kohlenwasserstoffrest, besonders bevorzugt einen Alkyloder Hydroxyalkylrest mit 10 bis 20 C-Atomen und insbesondere bevorzugt einen C₁₂-C₁₈-Alkyl- oder Hydroxyalkylrest darstellt. M ist Wasserstoff oder ein Kation, vorzugsweise ein Alkalimetallkation (z.B: Natrium, Kalium, Lithium) oder Ammonium oder substituiertes Ammonium, z.B. ein Methyl-, Dimethyl- und Trimethylammoniumkation oder ein quaternäres Ammoniumkation, wie Tetramethylammonium- und Dimethylpiperidiniumkation und quartäre Ammoniumkationen, abgeleitet von Alkylaminen wie Ethylamin, Diethylamin, Triethylamin und deren Mischungen.
Die Alkylethersulfate sind wasserlösliche Salze oder Säuren der Formel RO(A)ₘSO₃M, worin R bevorzugt einen unsubstituierten C₁₀-C₂₄-Alkyl- oder Hydroxyalkylrest, besonders bevorzugt einen C₁₂-C₂₀-Alkyl- oder Hydroxyalkylrest und insbesondere bevorzugt einen C₁₂-C₁₈-Alkyl- oder Hydroxyalkylrest darstellt. A ist eine Ethoxy- oder Propoxyeinheit, m ist eine Zahl von größer als 0, typischerweise zwischen ca. 0,5 und ca. 6, besonders bevorzugt zwischen ca. 0,5 und ca. 3 und M ist ein Wasserstoffatom oder ein Kation, vorzugsweise ein Metallkation (z.B. Natrium, Kalium, Lithium, Calcium, Magnesium, etc.), Ammonium oder ein substituiertes Ammoniumkation. Beispiele für substituierte Ammoniumkationen sind Methyl-, Dimethyl-, Trimethylammonium- und quaternäre Ammoniumkationen wie Tetramethylammonium und Dimethylpiperidiniumkationen, sowie solche, die von Alkylaminen, wie Ethylamin, Diethylamin, Triethylamin oder Mischungen davon, abgeleitet sind. Als Beispiele seien genannt C₁₂-C₁₈-Alkyl-polyethoxylat-(1,0)sulfat, C₁₂-C₁₈-Alkyl-polyethoxylat-(2,25)sulfat, C₁₂-C₁₈-Alkyl-polyethoxylat-(3,0)sulfat, C₁₂-C₁₈-Alkyl-polyethoxylat-(4,0)sulfat, wobei das Kation Natrium oder Kalium ist.

Ebenso geeignet sind Alkylsulfonate mit geradkettigen oder verzweigten C₆-C₂₂-Alkylketten, beispielsweise primäre Paraffinsulfonate, sekundäre Paraffinsulfonate, Alkylarylsulfonate, beispielsweise lineare Alkylbenzolsulfonate mit C₅-C₂₀-Alkylketten, Alkylnaphthalensulfonate, Kondensationsprodukte aus Naphthalensulfonat und Formaldehyd, Lignosulfonat, Alkylestersulfonate, d.h. sulfonierte lineare Ester von C₈-C₂₀-Carboxylsäuren (d.h. Fettsäuren); C₈-C₂₄-Olefinsulfonate, sulfonierte Polycarboxylsäuren, hergestellt durch Sulfonierung der Pyrolyseprodukte von Erdalkalimetallcitraten.

Weitere geeignete anionische Tenside sind ausgewählt aus Alkylglycerinsulfaten, Fettacylglycennsulfaten, Oleylglycerinsulfaten, Alkylphenolethersulfaten, Alkylphosphaten, Alkyletherphosphaten, isethionaten wie Acylisethionaten, N-Acyltauriden, Alkylsuccinamaten, Sulfosuccinaten, Monoestern der Sulfosuccinate (besonders gesättigte und ungesättigte C₁₂-C₁₈-Monoester) und Diestern der Sulfosuccinate (besonders gesättigte und ungesättigte C₁₂-C₁₈-Diester), Acylsarcosinaten, Sulfaten von Alkylpolysacchariden wie Sulfaten von Alkylpolyglycosiden, verzweigten primären Alkylsulfaten und Alkylpolyethoxycarboxylaten wie denen der Formel RO(CH₂CH₂O)ₖCH₂COO⁻M⁺ worin R eine C₈-C₂₂-Alkylgruppe, k eine Zahl von 0 bis 10 und M ein lösliches Salz bildendes Kation ist.

In einer weiteren bevorzugten Ausführungsform ist das Gewichtsverhältnis der einen oder der mehreren Substanzen der Komponente b) zu dem einen oder den mehreren anionischen Tensiden von 95 : 5 bis 5 : 95, bevorzugt von 80 : 20 bis 20 : 80, besonders bevorzugt von 80 : 20 bis 70 : 30 oder von 20 : 80 bis 30 : 70.

In einer weiteren bevorzugten Ausführungsform enthalten die erfindungsgemäßen Zusammensetzungen als weitere Komponente ein oder mehrere nichtionische Tenside, amphotere Tenside und/oder kationische Tenside. Darunter bevorzugt sind solche erfindungsgemäßen Zusammensetzungen, die als weitere Komponente ein oder mehrere nichtionische Tenside und/oder ein oder mehrere amphotere Tenside enthalten.

Als nichtionische Tenside kommen vorzugsweise in Betracht Fettalkoholethoxylate (Alkylpolyethylenglykole), Alkylphenolpolyethylenglykole, Alkylmercaptanpolyethylen-glykole, Fettaminethoxylate (Alkylaminopolyethylenglykole), Fettsäureethoxylate (Acylpolyethylenglykole), Polypropylenglykolethoxylate (z.B. Pluronic^{®}), Fettsäurealkylolamide (Fettsäureamidpolyethylenglykole), N-Alkyl- und N-Alkoxypolyhydroxyfettsäureamide, Alkylpolysaccharide, Saccharoseester, Sorbitester und Polyglykolether.

Als amphotere Tenside kommen vorzugsweise in Betracht Amphoacetate, besonders bevorzugt Monocarboxylate und Dicarboxylate wie Cocoamphocarboxypropionat, Cocoamidocarboxypropionsäure, Cocoamphocarboxyglycinat (oder auch als Cocoamphodiacetat bezeichnet) und Cocoamphoacetat.

An kationischen Tensiden können eingesetzt werden Di-(C₁₀-C₂₄)-Alkyldimethylammoniumchlorid oder -bromid, vorzugsweise Di-(C₁₂-C₁₈)-Alkyldimethylammoniumchlorid oder -bromid; (C₁₀-C₂₄)-Alkyl-dimethylethylammoniumchlorid oder -bromid; (C₁₀-C₂₄)-Alkyl-trimethyl-ammoniumchlorid oder -bromid, vorzugsweise Cetyltrimethylammoniumchlorid oder -bromid und (C₂₀-C₂₂)-Alkyl-trimethylammoniumchlorid oder -bromid; (C₁₀-C₂₄)-Alkyldimethylbenzyl-ammoniumchlorid oder -bromid, vorzugsweise (C₁₂-C₁₈)-Alkyldimethylbenzyl-ammoniumchlorid; N-(C₁₀-C₁₈)-Alkyl-pyridiniumchlorid oder -bromid, vorzugsweise N-(C₁₂-C₁₆)-Alkyl-pyridiniumchlorid oder -bromid; N-(C₁₀-C₁₈)-Alkyl-isochinolinium-chlorid, -bromid oder -monoalkylsulfat; N-(C₁₂-C₁₈)-Alkylpolyoylaminoformylmethyl-pyridiniumchlorid; N-(C₁₂-C₁₈)-Alkyl-N-methylmorpholinium-chlorid, -bromid oder -monoalkylsulfat; N-(C₁₂-C₁₈)-Alkyl-N-ethylmorpholinium-chlorid, -bromid oder -monoalkylsulfat; (C₁₆-C₁₈)-Alkyl-pentaoxethylammonium-chlorid; Diisobutyl-phenoxyethoxyethyldimethylbenzylammoniumchlorid; Salze des N,N-Diethylamino-ethylstearylamids und -oleylamids mit Salzsäure, Essigsäure, Milchsäure, Zitronensäure, Phosphorsäure; N-Acylaminoethyl-N,N-diethyl-N-methyl-ammoniumchlorid, -bromid oder -monoalkylsulfat und N-Acylaminoethyl-N,N-diethyl-N-benzyl-ammonium-chlorid, -bromid oder -monoalkylsulfat, wobei Acyl vorzugsweise für Stearyl oder Oleyl steht.

Als Verdickungsmittel können Xanthan gum und/oder Cellulose, beispielsweise Carboxy-, Methyl-, Ethyl- oder Propylcellulose in den Gewichtsmengen von 0,01 bis 5 %, bezogen auf das fertige Mittel, eingesetzt werden. Als Lösungsmittel eignen sich Wasser, Ethylenglykol, Diethylenglykol und Monopropylenglykol.

Als Dispergiermittel und Emulgator eignen sich Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C₁₂-C₁₈-Fettsäuremono- und -diester von Anlagerungsprodukten von 1 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und deren Ethylenoxidanlagerungs-produkten; Anlagerungsprodukte von 15 bis 60 Mol Ethylenoxid an Rizinusöl und/oder gehärtetes Rizinusöl; Polyol- und insbesondere Polyglycerinester wie z.B. Polyglycerinpolyricinoleat und Polyglycerinpoly-12-hydroxystearat. Ebenfalls geeignet sind Gemische von Verbindungen aus mehreren dieser Substanzklassen. Die Anlagerungsprodukte von Ethylenoxid und/oder Propylenoxid an Fettalkohole, Fettsäuren, Alkylphenole, Glycerin monound -diester sowie Sorbitanmono- und -diester von Fettsäuren oder an Rizinusöl stellen bekannte, im Handel erhältliche Produkte dar. Es handelt sich dabei um Homologengemische, deren mittlerer Alkoxilierungsgrad dem Verhältnis der Stoffmengen von Ethylenoxid und/oder Propylenoxid und Substrat, mit denen die Anlagerungsreaktion durchgeführt wird, entspricht.

Weitere Adjuvants können Polyglycerinester, Alkoholethoxylate, Alkylpolysacharide, Fettaminethoxylate, Sorbitan- und Sorbitolethoxylatderivate und Derivate von Alk(en)ylbernsteinsäureanhydrid sein. Für feste Formulierungen kommen als Bindemittel Polyvinylpyrrolidon, Polyvinylalkohol, Carboxymethylcellulose, Zucker, beispielsweise Sucrose, Sorbitol oder Stärke in Betracht. Als Verdünner, Absorber oder Träger eignen sich Carbon Black, Talg, Kaolin, Aluminium-, Calcium- oder Magnesiumstearat, Natriumtripolyphosphat, Natriumtetraborat, Natriumsulphat, Silikate und Natriumbenzoat. Als Sprengmittel wirken Cellulose, beispielsweise Carboxymethylcellulose, Polyvinylpyrrolidon, Natrium- oder Kaliumacetat, Carbonate, Bicarbonate, Sesquicarbonate, Ammoniumsulfat oder Kaliumhydrogenphosphat. Als Netzmittel können Alkoholethoxylate/-propoxylate verwendet werden.

In einer weiteren bevorzugten Ausführungsform der Erfindung enthalten die erfindungsgemäßen Zusammensetzungen neben der einen oder den mehreren Substanzen der Komponente b) keine weiteren oberflächenaktiven Substanzen. Der Begriff der oberflächenaktiven Substanzen umfasst beispielsweise Tenside, Cotenside und Emulgatoren.

In einer weiteren bevorzugten Ausführungsform der Erfindung enthalten die erfindungsgemäßen Zusammensetzungen Wasser.

Die erfindungsgemäßen Zusammensetzungen sind z.B. in vorteilhafter Weise zur Bekämpfung von Unkraut geeignet. Weiterer Gegenstand der Erfindung ist daher auch die Verwendung einer erfindungsgemäßen Zusammensetzung zur Bekämpfung von Unkraut.

Zudem eignen sich die erfindungsgemäßen Zusammensetzungen auch vorteilhaft zur Regulierung des Wachstums von Pflanzen. Weiterhin Gegenstand der Erfindung ist daher auch die Verwendung einer erfindungsgemäßen Zusammensetzung zur Regulierung des Wachstums von Pflanzen.

### Beispiele

Bei allen folgenden Beispielen handelt es sich um Vergleichsbeispiele.

### Schritt A: Herstellung der Phosphorsäureester (Adjuvant I, III und V)

In einem Vierhalsrundkolben wird Isotridecylalkoholpolyglykolether vorgelegt und durch langsame Zugabe von 71 g Phosphorpentoxid bei geeigneter Reaktionstemperatur zur Umsetzung gebracht. Die verschiedenen Isotridecylalkoholpolyglykolether werden dabei in den in Tabelle 1 genannten Mengen eingesetzt.

**Tabelle 1 Menge an Isotridecylalkoholpolyglykolether**

| Adjuvant | Ethylenoxid-Einheiten pro Isotridecylalkoholpolyglykolether | Menge [g] |
|---|---|---|
| I | 5 | 420 |
| III | 6 | 464 |
| V | 10 | 640 |

Anschließend wird das Reaktionsgemisch mit 9 g entsalztem Wasser (E-Wasser) hydrolysiert.

### Schritt B: Herstellung neutralisierter Phosphorsäureester (Adjuvant II und IV)

In einem Vierhalskolben, der mit Thermometer und Rückflusskühler ausgestattet ist, werden 500 g Phosphorsäureester aus Schritt A, 105 g eines Lösevermittlers (Propylenglykol) sowie 50 g E-Wasser eingewogen. Anschließend werden bei 50 - 60°C 120 g einer 50 gew.-%igen Lösung von Kaliumhydroxid in Wasser oder 85,6 g einer 50 gew.-%igen Lösung von Natriumhydroxid in Wasser langsam mittels Tropftrichter zugegeben. Als Endprodukt resultiert ein Produkt, gemäß der Formel (Ia) und der Tabelle 2.

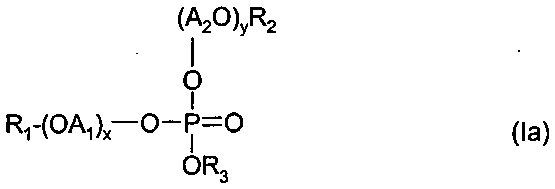

**Tabelle 2: Adjuvant I bis V**

| Adjuvant | R₁ | A₁ und A₂ | x | y und R₂ | R₃ |
|---|---|---|---|---|---|
| I | i-C₁₃-Alkyl | -CH₂CH₂- | 5 | y = 0; R₂ = H (40%) y = 5; R₂ = i-C₁₃-Alkyl (60%) | H |
| II | i-C₁₃-Alkyl | -CH₂CH₂- | 5 | y = 0; R₂ = Na (40%) y = 5; R₂ = i-C₁₃-Alkyl (60%) | Na |
| III | i-C₁₃-Alkyl | -CH₂CH₂- | 6 | y = 0; R₂ = H (40%) y = 6; R₂ = i-C₁₃-Alkyl (60%) | H |
| IV | i-C₁₃-Alkyl | -CH₂CH₂- | 6 | y = 0; R₂ = K (40%) y = 6; R₂ = i-C₁₃-Alkyl (60%) | K |
| V | i-C₁₃-Alkyl | -CH₂CH₂- | 10 | y = 0; R₂ = H (40%) y = 10; R₂ = i-C₁₃-Alkyl (60%) | H |

### Wirksamkeit der Adjuvantien I bis V bei Clodinafop Propargyl

Es werden Testformulierungen hergestellt indem die handelsübliche Formulierung Topic 240 welche 240 g Clodinafop propargyl pro Liter Formulierung enthält, wie vom Hersteller (Syngenta) angegeben, mit Wasser versetzt wird. Zu dieser Emulsion werden die Adjuvantien in einer Menge zugesetzt, die einer Konzentration von 0,25% w/v (2,5 g/l) entspricht. Diese Testlösungen werden gemäß folgender Tabelle in einem Gewächshaus auf die Pflanzenspezies *Avena fatura L.* (AVEFA) in unterschiedlichen Konzentrationen appliziert (Angabe der Konzentration in g a.i. / ha, wobei a.i. active ingredient bedeutet), während sie sich im 2-3 Blattstadium befinden.

Nach 21 Tagen wird die Wirksamkeit der herbiziden Formulierung durch Auswiegen der noch vorhandenen Pflanzenteile (fresh weight) beurteilt. Die Ergebnisse sind in Tabelle 3 dargestellt.

**Tabelle 3: Einfluss von phosphatiertem Isotridecylalkoxylat auf die Wirksamkeit von Clodinafop propargyl**

| Clodinafop propargyl | Adjuvant | fresh weight [g] |
|---|---|---|
| [g a.i. / ha] | | AVEFA |
| - | - | 17,48 |
| 5 | - | 15,69 |
| 5 | I | 1,54 |
| 5 | II | 1,70 |
| 5 | III | 1,60 |
| 5 | IV | 2,30 |
| 5 | V | 4,25 |

### Wirksamkeit der Adjuvantien I bis V bei Imazethapyrammonium

Es werden Testformulierungen hergestellt indem eine wässrige Lösung von Imazethapyr-ammonium in einer Konzentration von 5 mmol eingestellt wird. Zu dieser Lösung werden die Adjuvantien in einer Menge zugesetzt, die einer Konzentration von 0,25 % w/v (2,5 g/l) entspricht. Diese Testlösungen werden gemäß folgender Tabelle in einem Gewächshaus auf die Pflanzenspezies *Solanum Nigrum L.* (SOLNI) und *Lolium perenne L.* (LOLPE) in unterschiedlichen Konzentrationen appliziert (Angabe der Konzentration in g ae / ha, wobei ae acidic equivalent bedeutet), während sie sich im 2-3 Blattstadium befinden.

Nach 14 Tagen wird die Wirksamkeit der herbiziden Formulierung durch Auswiegen der noch vorhandenen Pflanzenteile (fresh weight) beurteilt. Die Ergebnisse sind in Tabelle 4 dargestellt.

**Tabelle 4: Einfluss von phosphatiertem Isotridecylalkoxylat auf die Wirksamkeit von Imazethapyrammonium**

| Imazethapyrammonium [g ae / ha] | Adjuvant | fresh weight [g] | |
|---|---|---|---|
| | | SOLNI | LOLPE |
| - | - | 15,42 | 13,97 |
| 4,0 | - | 10,61 | 13,40 |
| 4,0 | I | 2,44 | 5,69 |
| 4,0 | II | 2,34 | 8,70 |
| 4,0 | III | 2,04 | 8,59 |
| 4,0 | IV | 3,05 | 9,65 |
| 4,0 | V | 6,23 | 10,45 |

## Patentansprüche

1. Zusammensetzung enthaltend
a) eine oder mehrere Substanzen ausgewählt aus Pestiziden und Phytohormonen und
b) eine oder mehrere Substanzen ausgewählt aus Alkylarylphosphorsäureestern der Formel (I) 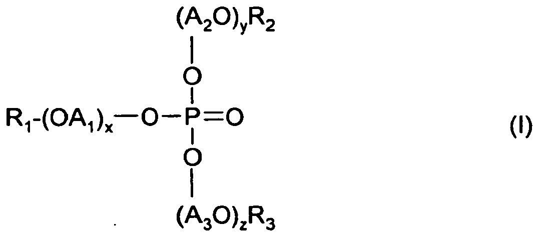 worin
R₁ eine Arylgruppe ist, die mit 1 bis 3 verzweigten Alkylgruppen, die jeweils unabhängig voneinander 3 bis 18 Kohlenstoffatome enthalten, substituiert ist,
R₂ und R₃ jeweils unabhängig voneinander für Wasserstoff, Alkalimetall, Erdalkalimetall, substituiertes oder unsubstituiertes Ammonium oder für organische basische Gruppen oder einen verzweigten, gesättigten oder ungesättigten Alkyl- oder Alkenylrest mit 6 bis 30, Kohlenstoffatomen stehen oder eine Arylgruppe ist, die mit 1 bis 3 verzweigten Alkylgruppen, die jeweils unabhängig voneinander 3 bis 18 Kohlenstoffatome enthalten, substituiert ist,
A₁, A₂ und A₃ jeweils unabhängig voneinander für eine Alkylengruppe mit 2 bis 4 Kohlenstoffatomen stehen und
x, y und z jeweils unabhängig voneinander eine Zahl von 0 bis 30 bedeuten.

2. Zusammensetzung nach Anspruch 1, **dadurch gekennzeichnet, dass** alle in den Verbindungen der Komponente b) enthaltenen Alkylgruppen verzweigt sind.

3. Zusammensetzung nach Anspruch 1 oder 2, **dadurch gekennzeichnet, dass** die Anzahl der Kohlenstoffatome in allen Alkylgruppen der Verbindungen der Komponente b) zusammen von 6 bis 36 beträgt.

4. Zusammensetzung nach einem oder mehreren der Ansprüche 1 bis 3,
**dadurch gekennzeichnet, dass** die eine oder die mehreren Substanzen der Komponente b) ausgewählt sind aus gegebenenfalls Ethylenoxid-Einheiten enthaltenden Tri-sec-butylphenolphosphorsäureestern und deren Salzen.

5. Zusammensetzung nach Anspruch 4, **dadurch gekennzeichnet, dass** die Tri-sec-butylphenolphosphorsäureester 4 bis 8 Ethylenoxid-Einheiten enthalten.

6. Zusammensetzung nach Anspruch 4 oder 5, **dadurch gekennzeichnet, dass** die Substanzen der Komponente b) ausgewählt sind aus Mischungen von Tri-sec-butylphenolphosphorsäureestern, in denen der Anteil an Monoester von 40 bis 60 Gew.% und der Anteil an Diester von 40 bis 60 Gew.-% beträgt.

7. Zusammensetzung nach einem oder mehreren der Ansprüche 1 bis 6,
**dadurch gekennzeichnet, dass** die eine oder die mehreren Substanzen der Komponente a) ausgewählt sind aus Pestiziden.

8. Zusammensetzung nach einem oder mehreren der Ansprüche 1 bis 7,
**dadurch gekennzeichnet, dass** die eine oder die mehreren Substanzen der Komponente a) ausgewählt sind aus Herbiziden, Insektiziden, Fungiziden, Akariziden, Bakteriziden, Molluskiden, Nematiziden und Rodentiziden.

9. Zusammensetzung nach Anspruch 8, **dadurch gekennzeichnet, dass** die eine oder die mehreren Substanzen der Komponente a) ausgewählt sind aus Herbiziden.

10. Zusammensetzung nach Anspruch 9, **dadurch gekennzeichnet, dass** die eine oder die mehreren Substanzen der Komponente a) ausgewählt sind aus Clodinafop propargyl und Imazethapyr-ammonium.

11. Zusammensetzung nach einem oder mehreren der Ansprüche 1 bis 10, **dadurch gekennzeichnet, dass** sie als feste Zubereitung vorliegt und die eine oder die mehreren Substanzen der Komponente a) in Mengen von 20 bis 80 Gew.-% und die eine oder die mehreren Substanzen der Komponente b) in Mengen von 5 bis 60 Gew.-% enthält.

12. Zusammensetzung nach einem oder mehreren der Ansprüche 1 bis 10, **dadurch gekennzeichnet, dass** sie als Konzentrat-Formulierung vorliegt und die eine oder die mehreren Substanzen der Komponente a) in Mengen von 5 bis 50 Gew.-% und die eine oder die mehreren Substanzen der Komponente b) in Mengen von 5 bis 70 Gew.-% enthält.

13. Zusammensetzung nach einem oder mehreren der Ansprüche 1 bis 12, **dadurch gekennzeichnet, dass** sie neben der einen oder den mehreren Substanzen der Komponente b) keine weiteren oberflächenaktiven Substanzen enthält.

14. Zusammensetzung nach einem oder mehreren der Ansprüche 1 bis 13, **dadurch gekennzeichnet, dass** sie zusätzlich Wasser enthält.

15. Verwendung einer Zusammensetzung nach einem oder mehreren der Ansprüche 1 bis 14 zur Bekämpfung von Unkraut.

16. Verwendung einer Zusammensetzung nach einem oder mehreren der Ansprüche 1 bis 14 zur Regulierung des Wachstums von Pflanzen.

## Claims

1. A composition comprising
a) one or more substances selected from pesticides and phytohormones and
b) one or more substances selected from alkylaryl phosphoric esters of the formula (I) 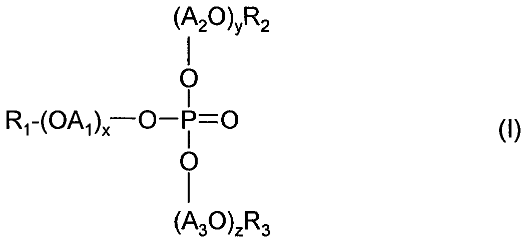 in which
R₁ is an aryl group which is substituted by 1 to 3 branched alkyl groups, each of which comprise independently of one another 3 to 18 carbon atoms,
R₂ and R₃ are each independently of one another hydrogen, alkali metal, alkaline earth metal, substituted or unsubstituted ammonium or organic basic groups or a branched, saturated or unsaturated alkyl or alkenyl radical having 6 to 30 carbon atoms, or an aryl group which is substituted by 1 to 3 branched alkyl groups, each of which comprise independently of one another 3 to 18 carbon atoms,
A₁, A₂ and A₃ are each independently of one another an alkylene group having 2 to 4 carbon atoms, and
x, y and z are each independently of one another a number from 0 to 30.

2. The composition as claimed in claim 1, wherein all the alkyl groups present in the compounds of component b) are branched.

3. The composition as claimed in claim 1 or 2, wherein the number of carbon atoms in all the alkyl groups of the compounds of component b) totals from 6 to 36.

4. The composition as claimed in one or more of claims 1 to 3, wherein the one or more substances of component b) are selected from tri-sec-butylphenol phosphoric esters optionally comprising ethylene oxide units, and their salts.

5. The composition as claimed in claim 4, wherein the tri-sec-butylphenol phosphoric esters comprise 4 to 8 ethylene oxide units.

6. The composition as claimed in claim 4 or 5, wherein the substances of component b) are selected from mixtures of tri-sec-butylphenol phosphoric esters in which the proportion of monoester is from 40 to 60% by weight and the proportion of diester is from 40 to 60% by weight.

7. The composition as claimed in one or more of claims 1 to 6, wherein the one or more substances of component a) are selected from pesticides.

8. The composition as claimed in one or more of claims 1 to 7, wherein the one or more substances of component a) are selected from herbicides, insecticides, fungicides, acaricides, bactericides, molluscides, nematicides and rodenticides.

9. The composition as claimed in claim 8, wherein the one or more substances of component a) are selected from herbicides.

10. The composition as claimed in claim 9, wherein the one or more substances of component a) are selected from clodinafop propargyl and imazethapyr-ammonium.

11. The composition as claimed in one or more of claims 1 to 10, which is in the form of a solid preparation and comprises the one or more substances of component a) in amounts of from 20 to 80% by weight and the one or more substances of component b) in amounts of from 5 to 60% by weight.

12. The composition as claimed in one or more of claims 1 to 10, which is in the form of a concentrate formulation and comprises the one or more substances of component a) in amounts of from 5 to 50% by weight and the one or more substances of component b) in amounts of from 5 to 70% by weight.

13. The composition as claimed in one or more of claims 1 to 12, which, in addition to the one or more substances of component b), comprises no further surface-active substances.

14. The composition as claimed in one or more of claims 1 to 13, which additionally comprises water.

15. The use of a composition as claimed in one or more of claims 1 to 14 for weed control.

16. The use of a composition as claimed in one or more of claims 1 to 14 for regulating plant growth.

## Revendications

1. Composition contenant
a) une ou plusieurs substances choisies parmi des pesticides et des phytohormones et
b) une ou plusieurs substances choisies parmi des esters alkylaryliques d'acide phosphorique de formule (I) 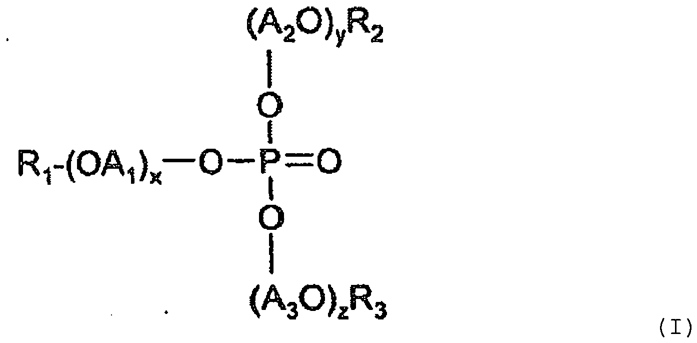 dans laquelle
R₁ est un groupe aryle qui est substitué par 1 à 3 groupes alkyle ramifiés qui contiennent chacun indépendamment 3 à 18 atomes de carbone,
R₂ et R₃ chacun indépendamment représentent un atome d'hydrogène, un métal alcalin, un métal alcalinoterreux, un groupe ammonium substitué ou non substitué ou des groupes organiques basiques ou un radical alkyle ou alcényle ramifié, saturé ou insaturé, ayant de 6 à 30 atomes de carbone ou représentent un groupe aryle qui est substitué par 1 à 3 groupes alkyle ramifiés qui contiennent chacun indépendamment 3 à 18 atomes de carbone,
A₁, A₂ et A₃ représentent chacun indépendamment un groupe alkylène ayant de 2 à 4 atomes de carbone et
x, y et z représentent chacun indépendamment un nombre valant de 0 à 30.

2. Composition selon la revendication 1, **caractérisée en ce que** tous les groupes alkyle contenus dans les composés du composant b) sont ramifiés.

3. Composition selon la revendication 1 ou 2, **caractérisée en ce que** le nombre des atomes de carbone dans tous les groupes alkyle des composés du composant b) ensemble vaut de 6 à 36.

4. Composition selon une ou plusieurs des revendications 1 à 3, **caractérisée en ce que** ladite une ou lesdites plusieurs substances du composant b) sont choisies parmi des phosphates de tri-sec-butylphénol et leurs sels, contenant éventuellement des groupes oxyde d'éthylène.

5. Composition selon la revendication 4, **caractérisée en ce que** les phosphates de tri-sec-butylphénol contiennent 4 à 8 groupes oxyde d'éthylène.

6. Composition selon la revendication 4 ou 5, **caractérisée en ce que** les substances du composant b) sont choisies parmi des mélanges de phosphates de tri-sec-butylphénol, dans lesquels la proportion des monoesters vaut de 40 à 60 % en poids et la proportion des diesters vaut de 40 à 60 % en poids.

7. Composition selon une ou plusieurs des revendications 1 à 6, **caractérisée en ce que** ladite une ou lesdites plusieurs substances du composant a) sont choisies parmi des pesticides.

8. Composition selon une ou plusieurs des revendications 1 à 7, **caractérisée en ce que** ladite une ou lesdites plusieurs substances du composant a) sont choisies parmi des herbicides, insecticides, fongicides, acaricides, bactéricides, mollusquicides, nématicides et rodenticides.

9. Composition selon la revendication 8, **caractérisée en ce que** ladite une ou lesdites plusieurs substances du composant a) sont choisies parmi des herbicides.

10. Composition selon la revendication 9, **caractérisée en ce que** ladite une ou lesdites plusieurs substances du composant a) sont choisies parmi le clodinafop propargyle et l'imazéthapyr-ammonium.

11. Composition selon une ou plusieurs des revendications 1 à 10, **caractérisée en ce qu'**elle se présente sous forme d'une préparation solide et contient ladite une ou lesdites plusieurs substances du composant a) en quantités de 20 à 80 % en poids et ladite une ou lesdites plusieurs substances du composant b) en quantités de 5 à 60 % en poids.

12. Composition selon une ou plusieurs des revendications 1 à 10, **caractérisée en ce qu'**elle se présente sous forme d'une composition de concentré et contient ladite une ou lesdites plusieurs substances du composant a) en quantités de 5 à 50 % en poids et ladite une ou lesdites plusieurs substances du composant b) en quantités de 5 à 70 % en poids.

13. Composition selon une ou plusieurs des revendications 1 à 12, **caractérisée en ce qu'**en plus de ladite une ou desdites plusieurs substances du composant b) elle ne contient pas d'autres substances tensioactives.

14. Composition selon une ou plusieurs des revendications 1 à 13, **caractérisée en ce qu'**elle contient en outre de l'eau.

15. Utilisation d'une composition selon une ou plusieurs des revendications 1 à 14, pour la lutte contre des adventices.

16. Utilisation d'une composition selon une ou plusieurs des revendications 1 à 14, pour la régulation de la croissance de plantes.
